# DEMANDE DE BREVET EUROPEEN

(11) **EP 0 973 318 A1**
(43) Date de publication de la demande: **19.01.2000**
(21) Numéro de dépôt: 99460039.3
(22) Date de dépôt: 07.06.1999
(51) Int. Cl.: H04M 15/00, G07F 7/08

(54) **Procédé pour payer à distance, au moyen d'un radiotéléphone mobile, l'acquisition d'un bien et/ou d'un service, et système et radiotéléphone mobile correspondants**

(30) Priorité: 15.06.1998 FR 9807666; 23.10.1998 FR 9813471
(71) Demandeur: Societé Francaise du Radiotéléphone SRF, 92915 Paris la Défence (FR)
(72) Inventeur: Capitant, Arnaud, 45650 St Jean-Le-Blanc (FR); François, Christophe, 92200 Neuilly-Sur-Seine (FR); Jean-Marie, Olivier, 78490 Bazoches (FR); Mercier, Philippe, 75013 Paris (FR); Frey, Sophie, 78100 St-Germain-En-Laye (FR); Hitti, Abdallah, 78100 St-Germain-En-Laye (FR); Lucas, Philippe, 91200 Palaiseau (FR); Wary, Jean-Pierre, 92340 Bourg-La-Reine (FR)
(74) Mandataire: Vidon, Patrice

(57) **Abrégé**

L'invention concerne un procédé pour payer à distance, de manière sécurisée, au moyen d'un radiotéléphone mobile (1) utilisé par un acheteur (2), un bien et/ou un service acquis par l'acheteur auprès d'un fournisseur (7). Le radiotéléphone mobile permet l'accès à un réseau de radiocommunication (5) géré par un centre de gestion (6). Un serveur de paiement (4) est raccordé au réseau de radiocommunication (5). Selon la présente invention, le procédé comprend une étape d'identification dudit acheteur (2) par ledit centre de gestion (6) et/ou par ledit serveur de paiement (4) et/ou un centre de contrôle, l'identification de l'acheteur consistant à s'assurer que l'acheteur est un abonné régulièrement inscrit sur une liste des abonnés audit réseau de radiocommunication (5). Le procédé peut comprendre en outre une étape d'authentification dudit acheteur (2).

## Description

La présente invention concerne un procédé pour payer à distance, au moyen d'un radiotéléphone mobile, l'acquisition d'un bien et/ou d'un service. L'invention concerne également un système et un radiotéléphone mobile permettant la mise en oeuvre d'un tel procédé.

Elle s'applique à tous types de radiotéléphones mobiles, c'est-à-dire aussi bien à ceux comprenant uniquement un terminal, qu'à ceux comprenant un terminal coopérant avec un module d'identification d'abonné.

Dans le standard GSM, le radiotéléphone mobile (aussi appelé "station mobile") est du second type, et le terminal et le module d'identification d'abonné qui le composent sont appelés respectivement "équipement mobile" et "carte SIM" (pour "Subscriber Identity Module" en anglais). On rappelle qu'une carte SIM se présente sous la forme d'une carte à microprocesseur que l'on glisse dans le radiotéléphone mobile. Elle contient toutes les informations individuelles propres à l'abonné, et en particulier le numéro international d'abonné (ou IMSI, pour "International Mobile Subscriber Identity" en anglais) de ce dernier, ainsi qu'une clé d'authentification individuelle (appelée Ki) et un algorithme d'authentification individuelle (appelé A3/A8).

Divers procédés et systèmes de paiement électronique ont déjà été proposés.

Le brevet EP 451 057 B1, publié le 9 octobre 1991, décrit un procédé et un système mettant en oeuvre un serveur de paiement. La solution préconisée dans ce brevet implique l'utilisation d'une carte émettant un signal vocal d'identification. Ce signal est reçu par le microphone du téléphone puis transmis au serveur de paiement.

La demande de brevet WO 96/32701, publiée le 17 octobre 1996, décrit également un procédé de paiement électronique mettant en oeuvre un serveur de paiement. Il permet d'effectuer des transactions liées à l'achat de biens offerts par des marchands au moyen de services télématiques via un réseau de télécommunication informatique ouvert, par exemple le réseau "Internet", sur lequel sont connectés des postes serveurs de marchands et des postes clients ainsi qu'un poste serveur de paiement.

Dans le cadre de la présente invention, on suppose que le paiement de biens ou de services à distance, au moyen d'un radiotéléphone mobile, est effectué via un réseau de radiocommunication de type fermé. Par réseau de radiocommunication fermé, on entend notamment, mais non exclusivement, les réseaux basés sur la technologie GSM (par exemple le GSM 900, le DCS 1800, ...).

On rappelle qu'un réseau de radiocommunication fermé peut bien sûr être relié à un (ou plusieurs) réseau(x) ouvert(s), par l'intermédiaire de plateformes ou passerelles. Ainsi, un usager du réseau de radiocommunication fermé peut, avec son radiotéléphone mobile, accéder à un réseau ouvert. Par exemple, l'accès au réseau ouvert "Internet" est possible avec un radiotéléphone mobile, à partir d'un réseau GSM, si le radiotéléphone mobile possède des moyens (tels qu'un navigateur, ou "browser") de mise en oeuvre d'un protocole basé sur un langage spécifique, tel que le langage HDML (pour "Handset Device Markup Language" en anglais, ou "langage hypertexte pour terminaux portables") ou WML (pour "Wireless Markup Language" en anglais, ou "langage hypertexte pour terminaux sans fil"), ou encore tout autre langage du même type et/ou dérivé de l'un des deux langages précités.

Or, du fait qu'un réseau de radiocommunication fermé n'appartient pas à la catégorie des réseaux de télécommunication informatiques ouverts, la solution préconisée par la demande WO 96/32701 ne peut s'appliquer au problème posé par l'invention (à savoir le paiement de biens ou de services à distance, au moyen d'un radiotéléphone mobile).

La présente invention a précisément pour but de fournir un procédé permettant de payer à distance, de manière sécurisée, au moyen d'un radiotéléphone mobile, un bien et/ou un service acquis par un acheteur auprès d'un fournisseur.

L'invention a également pour objectif de fournir un tel procédé de paiement qui minimise les interventions de l'acheteur, tout en offrant une sécurité optimale.

Ces différents objectifs, ainsi que d'autres qui apparaîtront par la suite, sont atteints selon l'invention à l'aide d'un procédé pour payer à distance, de manière sécurisée, au moyen d'un radiotéléphone mobile utilisé par un acheteur, un bien et/ou un service acquis par ledit acheteur auprès d'un fournisseur, ledit radiotéléphone mobile permettant l'accès à un réseau de radiocommunication géré par un centre de gestion, un serveur de paiement étant raccordé audit réseau de radiocommunication, ledit procédé comprenant l'étape suivante:
- identification dudit acheteur par ledit centre de gestion et/ou par ledit serveur de paiement et/ou un centre de contrôle, ladite identification de l'acheteur consistant à s'assurer que l'acheteur est un abonné régulièrement inscrit sur une liste des abonnés audit réseau de radiocommunication.---

Ainsi, au terme de cette étape d'identification de l'acheteur, le gestionnaire du serveur de paiement est assuré que l'acheteur fait licitement partie du réseau de radiocommunication auquel le serveur de paiement est raccordé.

Il est à noter que dans le cas où l'identification de l'acheteur est effectuée par le centre de gestion du réseau de radiocommunication, l'opérateur de radiocommunication (qui assure le fonctionnement de ce centre de gestion) devient, dans le cadre de la présente invention, un "semi-tiers de confiance" vis-à-vis de l'organisme bancaire (qui assure le fonctionnement du serveur de paiement). En effet, dans ce cas, l'organisme bancaire se contente d'authentifier l'acheteur, l'identification du titulaire du radiotéléphone mobile étant confiée à l'opérateur.

Préférentiellement, ladite étape d'identification de l'acheteur comprend elle-même les étapes successives suivantes :
- identification d'abonné, permettant audit centre de gestion et/ou audit serveur de paiement et/ou audit centre de contrôle de se voir communiquer un identifiant d'abonné propre audit acheteur, en tant qu'utilisateur dudit réseau de radiocommunication ;
- authentification d'abonné, permettant audit centre de gestion et/ou audit serveur de paiement et/ou audit centre de contrôle de contrôler ledit identifiant d'abonné qui lui(leur) a été communiqué lors de ladite étape d'identification d'abonné.

Ainsi, au cours de la première étape d'identification de l'acheteur, on tire avantageusement profit du fait que, dans un réseau de radiocommunication fermé (par exemple de type GSM), l'abonné doit être identifié et authentifié par l'opérateur en charge de la tarification pour éviter la fraude et veiller à ce que la facturation soit correcte. De façon astucieuse, on utilise donc la sécurisation sur des couches physiques qu'offre un réseau fermé, par exemple du type GSM. On rappelle que dans un réseau ouvert, tel que par exemple Internet, la sécurisation est au contraire réalisée au niveau applicatif.

De façon préférentielle, ladite étape d'authentification d'abonné comprend elle-même les étapes suivantes :
- fourniture d'un nombre aléatoire audit radiotéléphone mobile, par ledit centre de gestion et/ou ledit serveur de paiement et/ou ledit centre de contrôle;
- génération d'une signature électronique d'abonné par ledit radiotéléphone mobile :
   * avec un algorithme d'authentification individuelle et/ou une clé d'authentification individuelle contenus dans des zones protégées du radiotéléphone mobile, et
   * à partir dudit nombre aléatoire ;
- transmission de ladite signature électronique d'abonné audit centre de gestion et/ou audit serveur de paiement et/ou audit centre de contrôle, par le radiotéléphone mobile ;
- contrôle de ladite signature électronique d'abonné par ledit centre de gestion et/ou ledit serveur de paiement et/ou ledit centre de contrôle.

Ainsi, on utilise lors de l'étape d'identification de l'acheteur la procédure d'authentification d'abonné prévue dans la norme GSM. Il est important de noter que procédure d'authentification d'abonné ne doit en aucun cas être confondue avec la procédure d'authentification de l'acheteur.

Préférentiellement, ledit procédé comprend en outre une étape d'authentification dudit acheteur, et éventuellement d'une décision d'achat du bien et/ou du service acquis par l'acheteur, par ledit et/ou un centre de gestion et/ou par ledit serveur de paiement et/ou par ledit centre de contrôle.

Ainsi, au terme de cette étape d'authentification de l'acheteur, le gestionnaire du serveur de paiement est assuré que l'acheteur est habilité à payer les biens et/ou les services acquis. Le gestionnaire du serveur de paiement peut donc autoriser ou faire procéder aux compensations entre le compte de l'acheteur et celui du fournisseur.

Dans un mode de réalisation préférentiel de l'invention, ladite étape d'authentification de l'acheteur, et éventuellement de la décision d'achat, comprend elle-même les étapes suivantes :
- génération d'une signature électronique d'acheteur par le radiotéléphone mobile ;
- transmission de ladite signature électronique d'acheteur audit centre de gestion et/ou audit serveur de paiement et/ou audit centre de contrôle, par le radiotéléphone mobile ;
- contrôle de ladite signature électronique d'acheteur par ledit centre de gestion et/ou ledit serveur de paiement et/ou ledit centre de contrôle, ladite signature électronique d'acheteur étant tenue à la disposition de l'acheteur et du fournisseur.

Selon une variante avantageuse, ladite étape d'authentification de l'acheteur, et éventuellement de la décision d'achat, comprend elle-même les étapes suivantes:
- introduction dans le radiotéléphone mobile, par l'acheteur, au moyen d'un clavier associé au radiotéléphone mobile, d'un code de paiement confidentiel ;
- transmission de façon sécurisée dudit code de paiement confidentiel audit centre de gestion et/ou audit serveur de paiement et/ou audit centre de contrôle, par le radiotéléphone mobile ;
- contrôle dudit code de paiement confidentiel par ledit centre de gestion et/ou ledit serveur de paiement et/ou ledit centre de contrôle.

Ainsi, selon cette variante, il n'est pas nécessaire de calculer une signature. Par transmission de façon sécurisée, on entend par exemple une transmission sous forme cryptée.

Avantageusement, ladite étape d'authentification de l'acheteur, et éventuellement de la décision d'achat, comprend en outre une étape d'introduction dans le radiotéléphone mobile, par l'acheteur, au moyen d'un clavier associé au radiotéléphone mobile, d'un code de paiement confidentiel ; ladite signature électronique d'acheteur étant générée notamment en fonction dudit code de paiement confidentiel.

Cette étape, optionnelle, permet d'accroître la sécurisation de l'authentification de l'acheteur.

On peut prévoir deux variantes de réalisation avantageuses de cette étape d'introduction du code de paiement confidentiel.

Dans la première variante, cette étape est effectuée à l'aide d'un algorithme de saisie stocké dans ledit radiotéléphone mobile. Ainsi, dans cette première variante, le radiotéléphone assure le stockage permanent (dans le terminal et/ou le module d'identification d'abonné) de l'algorithme de saisie. Elle nécessite donc quelques adaptations au sein du radiotéléphone (dans le terminal et/ou le module d'identification d'abonné).

Dans la seconde variante, cette étape est effectuée à l'aide d'au moins une page téléchargée, au format HDML ou équivalent, et prévue à cet effet. Ainsi, dans cette seconde variante, le radiotéléphone n'assure aucun stockage permanent d'un quelconque algorithme de saisie.

Préférentiellement, ladite étape de génération d'une signature électronique d'acheteur est effectuée avec un algorithme de sécurisation de paiement et/ou une clé de sécurisation de paiement contenus dans des zones protégées du radiotéléphone mobile, et à partir de données relatives à la transaction et/ou de données relatives à l'acheteur.

On notera que la signature électronique d'acheteur permet d'authentifier soit uniquement l'acheteur, soit l'acheteur et la décision d'achat, selon qu'elle prend en compte ou non des données relatives à la transaction. Elle permet d'arbitrer les éventuelles contestations entre l'acheteur et/ou le fournisseur et/ou le serveur de paiement. Elle est essentielle en cas de contestation.

Avantageusement, au moins certaines desdites données relatives à la transaction incluent une variabilité.

De façon avantagseuse, ledit algorithme de sécurisation de paiement et/ou ladite clé de sécurisation de paiement est (sont) stocké(s) dans des zones protégées dudit terminal. Selon une variante avantageuse, le stockage est fait dans des zones protégées dudit module d'identification d'abonné.

De façon avantageuse, ledit procédé comprend en outre l'étape suivante : déverrouillage du radiotéléphone mobile, en cas de comparaison positive d'un code d'identification confidentiel, contenu dans des zones protégées du radiotéléphone mobile, à un code secret, connu de l'acheteur et introduit par ce dernier dans le radiotéléphone mobile au moyen d'un clavier.

Ce "déverrouillage" (parfois aussi appelé "initialisation") du radiotéléphone mobile est une vérification supplémentaire optionnelle, connue en soi, et offerte par certains opérateurs, notamment dans les réseaux de type GSM. On rappelle que le code d'identification personnel (ou code PIN, pour "Personal Identity Number" en anglais) est saisit par l'abonné par exemple à chaque introduction du module d'identfication d'abonné dans le terminal, ou à chaque mise en service de ce dernier.

Préférentiellement, au moins certaines desdites zones protégées du radiotéléphone mobile sont comprises dans un module d'identification d'abonné.

Il est en effet préférable, pour des raisons de sécurité et afin de rendre le terminai aussi indépendant que possible de l'utilisateur, de confiner un maximum d'informations personnelles et confidentielles (algorithme et clé d'authentification individuelle, algorithme et clé de sécurisation de paiement, ...) dans le module d'identification d'abonné.

Avantageusement, ledit procédé comprend en outre l'étape suivante : cryptage des données relatives au règlement de l'acquisition du biens et/ou du service, échangées entre le radiotéléphone mobile et le centre de gestion et/ou le serveur de paiement et/ou le centre de contrôle, de façon que la confidentialité de l'acquisition soit assurée.

Avantageusement, ledit procédé comprend en outre l'étape suivante : contrôle de l'intégrité des données relatives au règlement de l'acquisition du biens et/ou du service, échangées entre le radiotéléphone mobile et le centre de gestion et/ou le serveur de paiement et/ou le centre de contrôle, de façon qu'un fraudeur n'aie pas la possibilité de modifier lesdites données.

Dans un mode de réalisation préférentiel de l'invention, ledit acheteur est associé à un portefeuille électronique comprenant :
- un identifiant de portefeuille, associé à un identifiant d'abonné propre audit acheteur en tant qu'utilisateur dudit réseau de radiocommunication ;
- des moyens de paiement ;
- des informations relatives audit acheteur et/ou au(x) compte(s) dudit acheteur;
   l'utilisation desdits moyens de paiement, notamment lors d'un achat d'un bien et/ou d'un service, n'étant autorisée qu'après identification, et éventuellement authentification, réussie(s) de l'acheteur.

L'identification et l'éventuelle authentification de l'acheteur peuvent ainsi être vues comme l'identification et l'éventuelle l'authentification du portefeuille électronique de cet acheteur. On peut prévoir plusieurs cas, tels que par exemple :
- un abonné (et un module d'identification d'abonné correspondant) est associé à un unique portefeuille électronique ;
- plusieurs abonnés (et donc les différents modules d'identification d'abonné correspondants) partagent un même portefeuille électronique (cas par exemple d'une société détentrice du portefeuille) ;
- un même abonné (et un module d'identification d'abonné correspondant) est associé à plusieurs portefeuilles électroniques.

On notera que, du fait de la corrélation existant entre l'identifiant de portefeuille et l'identifiant d'abonné (l'abonné étant l'acheteur), l'identification de l'acheteur (en tant qu'abonné) fournit une identification implicite du porte-feuille électronique de celui-ci. On notera que dans le troisième cas précité, l'un des portefeuilles électroniques de l'abonné est par exemple choisi par défaut ou, selon une variante, on offre à l'acheteur la possibilité d'effectuer un choix parmi la pluralité de portefeuilles électroniques dont il dispose.

Après identification, et éventuellement authentification, l'acheteur peut effectivement utiliser les moyens de paiement compris dans son portefeuille électronique.

Avantageusement, ledit portefeuille électronique comprend en outre un code de paiement confidentiel, connu dudit acheteur. On rappelle que ce code de paiement confidentiel, saisi par l'acheteur au clavier du radiotéléphone, peut être pris en compte lors du calcul de la signature électronique d'acheteur, qui permet d'authentifier l'acheteur et éventuellement la décision d'achat.

Préférentiellement, ledit portefeuille électronique est stocké dans l'un des éléments appartenant au groupe comprenant ledit terminal, ledit module d'identification d'abonné, ledit serveur de paiement, ledit centre de gestion et ledit centre de contrôle.

En d'autres termes, diverses localisations du portefeuille électronique peuvent être envisagées sans sortir du cadre de la présente invention.

L'invention concerne aussi un système de paiement à distance, de manière sécurisée, au moyen d'un radiotéléphone mobile utilisé par un acheteur, un bien et/ou un service acquis par l'acheteur auprès d'un fournisseur.

L'invention concerne aussi un radiotéléphone mobile employé par un acheteur pour payer à distance, de manière sécurisée, un bien et/ou un service acquis par l'acheteur auprès d'un fournisseur.

Ce système et ce radiotéléphone selon l'invention comprennent des moyens permettant la mise en oeuvre du procédé précité.

D'autres caractéristiques et avantages de l'invention apparaîtront à la lecture de la description suivante de différentes variantes de réalisation de l'invention, données à titre d'exemple indicatif et non limitatif, et des dessins annexés, dans lesquels :
- la figure 1 présente une vue d'ensemble schématique d'un mode de réalisation particulier d'un système selon l'invention ;
- la figure 2 présente une vue, sous la forme de bloc diagramme, d'un mode de réalisation particulier d'un radiotéléphone mobile selon l'invention ;
- la figure 3 présente une vue, sous la forme de bloc diagramme, d'un mode de réalisation particulier d'un centre de gestion selon l'invention ;
- la figure 4 présente une vue, sous la forme de bloc diagramme, d'un mode de réalisation particulier d'un serveur de paiement selon l'invention ;
- la figure 5 présente, sous forme d'organigramme, les phases des opérations relatives à l'acquisition d'un bien et/ou d'un service ;
- la figure 6 présente un organigramme simplifié d'un mode de réalisation particulier du procédé selon l'invention ; et
- la figure 7 présente une vue, sous la forme de bloc diagramme, d'un mode de réalisation particulier d'un portefeuille électronique selon l'invention.

L'invention concerne donc un procédé, ainsi qu'un système et un radiotéléphone mobile correspondants, permettant à un acheteur de payer à distance, au moyen d'un radiotéléphone mobile, l'acquisition d'un bien et/ou d'un service.

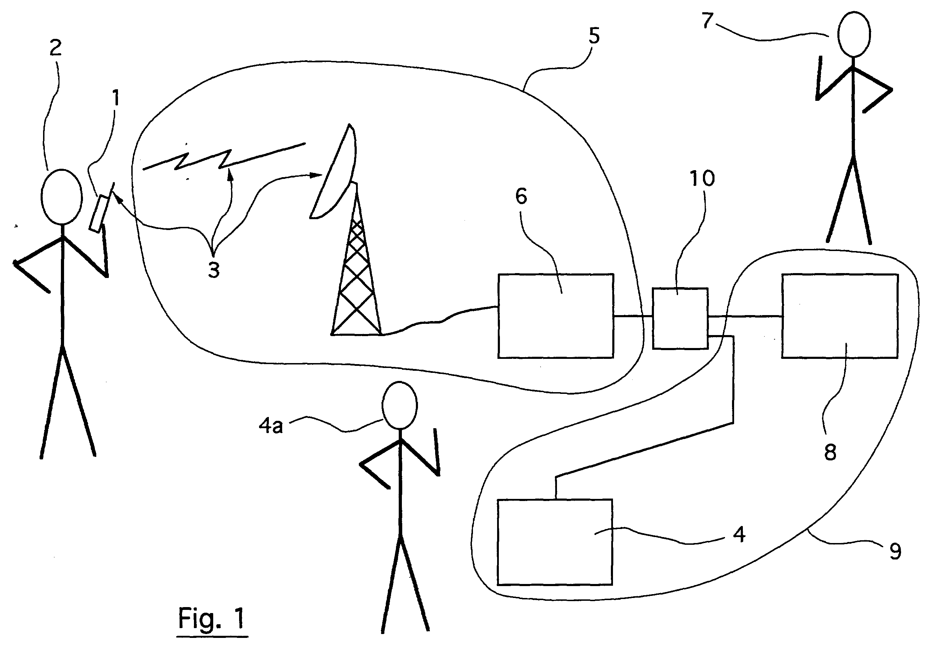

Dans le mode de réalisation particulier présenté sur la figure 1, le système comprend un radiotéléphone mobile 1 permettant l'accès, via une liaison hertzienne 3, à un réseau de radiocommunication 5 (par exemple un réseau GSM) géré par un centre de gestion 6. Un serveur de paiement 4 et un serveur de vente 8 sont par ailleurs raccordés au réseau de radiocommunication 5.

Dans l'exemple présenté, le serveur de paiement 4 et le serveur de vente 8 sont connectés à un réseau de télécommunication informatique ouvert, par exemple le réseau Internet 9. Le réseau de radiocommunication 5 est interconnecté à ce réseau Internet 9, via une passerelle 10 (par exemple une "plateforme d'accès UP", commercialisée par la société Unwired Planet). Le radiotéléphone mobile est dans ce cas muni d'un navigateur (par exemple un navigateur "UP.browser" (marque déposée), commercialisé par la société Unwired Planet) lui permettant, via la passerelle, de naviguer au sein du réseau Internet, et d'accéder notamment au serveur de paiement 4 et au serveur de vente 8.

Le système permet à un acheteur 2 muni du radiotéléphone mobile 1, et qui est donc supposé ici être également un abonné inscrit auprès de l'opérateur du réseau de radiocommunication 5, de payer à distance de manière sécurisée, un bien et/ou un service qu'il a acquis auprès d'un fournisseur 7 disposant du serveur de vente à distance 8.

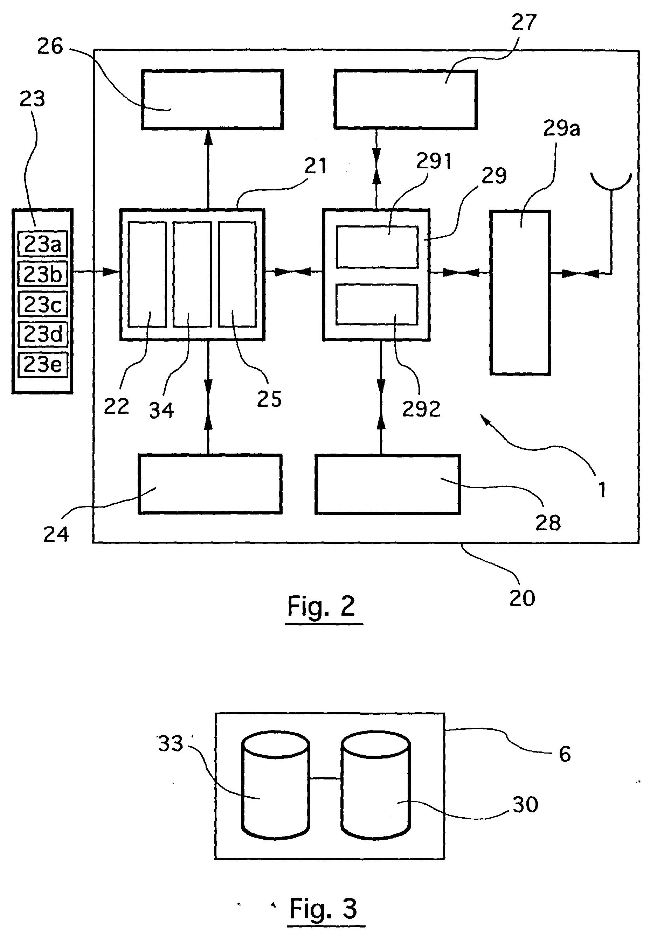

Dans le mode de réalisation particulier présenté sur la figure 2, le radiotéléphone mobile 1 comprend un terminal 20 coopérant avec une carte SIM 23. Il est clair cependant que la présente invention s'applique également à un radiotéléphone constitué du seul terminal (c'est-à-dire ne comprenant pas de module d'identification d'abonné).

De manière connue en soi, le terminal 20 comprend par exemple un module de gestion de communication 21 et un module de traitement de l'information 29, autour desquels sont interconnectés un clavier 24, un écran afficheur 26, un haut parleur 27, un microphone 28 et des moyens d'émission/réception radio 29a (comprenant une antenne).

Il est clair que l'invention s'applique plus généralement à tout type de radiotéléphone mobile. Ainsi, le terminal "classique" tel que décrit ci-dessus peut être remplacé par n'importe quel type de module de radiocommunication pouvant se connecter à un réseau de radiocommunication, tel que par exemple un terminal ne comprenant ni clavier ni écran, ou encore un microordinateur coopérant avec un terminal par l'intermédiaire d'une carte de type PCMCIA ("Personal Computer Memory Card International Association") ou équivalent.

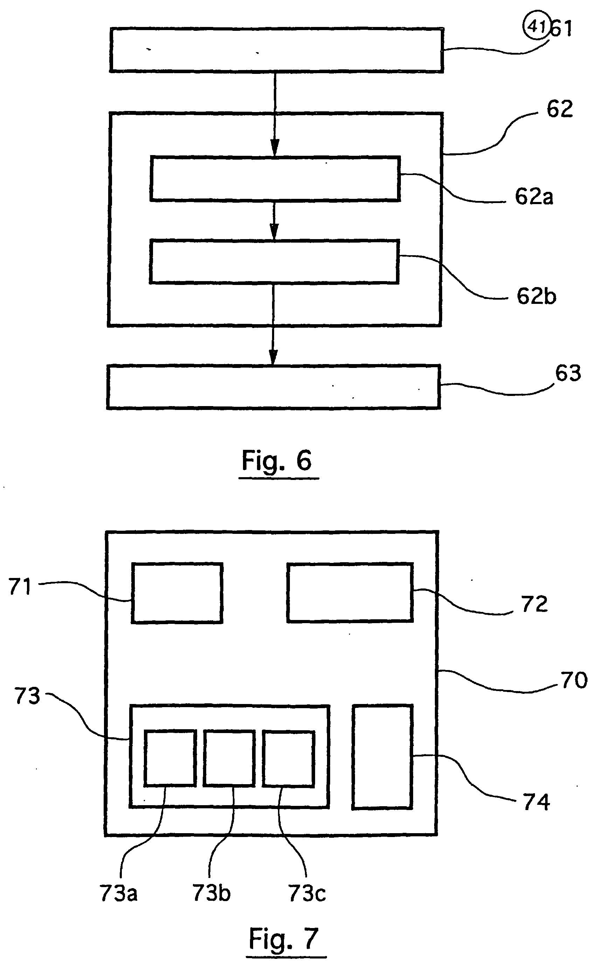

Comme présenté sur l'organigramme de la figure 6, le procédé selon l'invention comprend les étapes suivantes :
- (optionnellement) déverrouillage (61) (ou "initialisation") du radiotéléphone mobile 1 ;
- identification (62) de l'acheteur, en tant qu'utilisateur du réseau de radiocommunication, par le centre de gestion 6 et/ou par le serveur de paiement 4 et/ou par un centre de contrôle indépendant (non représenté) ;
- (optionnellement) authentification (63) de l'acheteur, et éventuellement d'une décision d'achat d'un bien et/ou d'un service acquis par l'acheteur, par le centre de gestion 6 et/ou le serveur de paiement 4 et/ou par le centre de contrôle (non représenté).

L'étape (optionnelle) 61 de déverrouillage du radiotéléphone 1, connue en soi, se déroule par exemple de la façon suivante : l'acheteur 2 saisit au clavier 4 un numéro d'identité personnel (ou code PIN selon la terminologie GSM), puis le radiotéléphone 1 compare le numéro d'identité personnel saisi par l'acheteur avec celui stocké dans des zones protégées du radiotéléphone mobile 1 (typiquement, dans la carte SIM 23). Le radiotéléphone 1 est "déverrouillé" (c'est-à-dire opérationnel dans le réseau de radiocommunication) uniquement en cas de comparaison positive.

L'étape 62 d'identification de l'acheteur 2 consiste, selon la présente invention, à identifier et authentifier l'abonné qu'est l'acheteur lorsqu'il utilise le radiotéléphone. Cette étape 62 comprend donc par exemple les étapes classiques suivantes :
- identification d'abonné (62a), permettant au centre de gestion 6 de se voir communiquer un identifiant d'abonné propre à l'acheteur, en tant qu'utilisateur du réseau de radiocommunication. L'identifiant d'abonné 23a, ou IMSI selon la terminologie GSM, est typiquement stocké dans la carte SIM 23 ;
- authentification d'abonné (62b), permettant au centre de gestion de contrôler l'identifiant d'abonné qui lui a été communiqué lors de l'étape 62a d'identification d'abonné.

Il est à noter que l'étape d'identification de l'acheteur (consistant en une identfication et une authentification d'abonné) est effectuée de façon automatique, c'est-àdire ne nécessite aucune intervention de l'acheteur. Ce dernier n'est sollicité que lors de la phase suivante d'authentification de l'acheteur, lorsqu'il doit saisir son code de paiement confidentiel.

Il est également important de noter que l'étape 62b d'authentification de l'abonné ne doit en aucun cas être confondue avec l'étape 63 d'authentification de l'acheteur présentée en détail par la suite. En effet, l'authentification de l'abonné (qu'est l'acheteur) intervient uniquement dans le cadre de l'identification de l'acheteur. On comprend que cette identification de l'acheteur doit ensuite être complétée par une authentification de l'acheteur, de façon que le serveur de paiement vérifie que l'acheteur identifié est bien habilité à effectuer des achats.

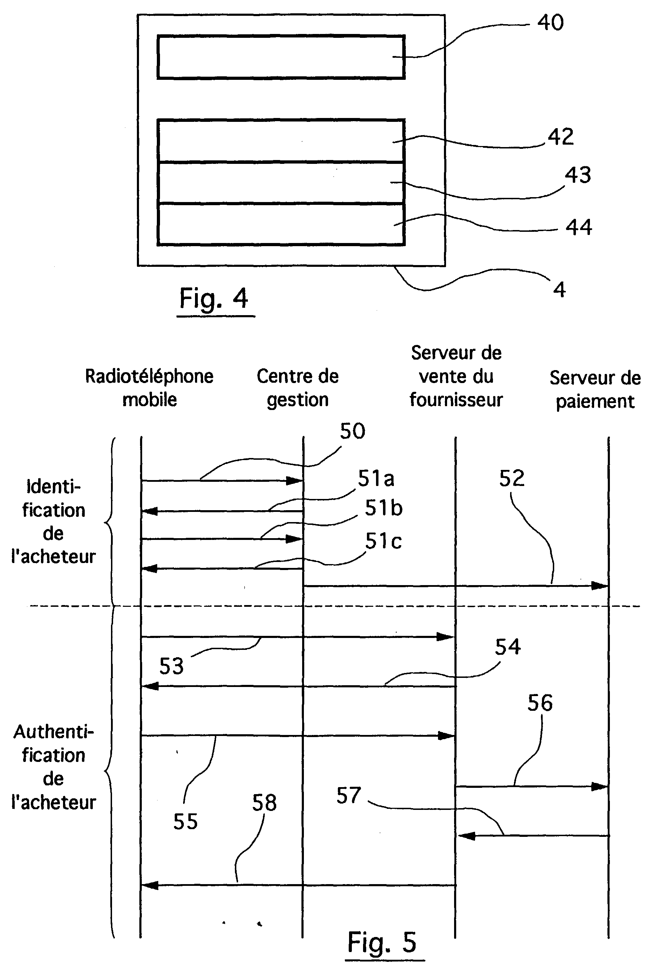

A titre d'exemple uniquement, on rappelle maintenant, en relation avec la figure 5, le déroulement "classique", en GSM, de ces étapes d'identification 62a et d'authentification 62b d'abonné. Le radiotéléphone 1 envoie l'identifiant d'abonné (IMSI) 50 de l'utilisateur au centre de gestion 6. Après que l'abonné se soit ainsi identifié (62a), le centre de gestion 6 doit contrôler son identité, c'est-à-dire l'authentifier (62b). Pour cela, le centre de gestion 6 fournit un nombre aléatoire ("RAND") 51a au radiotéléphone 1. A partir de ce nombre aléatoire, et avec un algorithme ("A3/A8") 23b et une clé ("Ki") 23c d'authentification individuelle contenus dans des zones protégées du radiotéléphone mobile (typiquement la carte SIM 23), le radiotéléphone 1 calcule une signature électronique d'abonné ("SRES"). Cette signature électronique d'abonné 51b est transmise au centre de gestion 6 (et plus précisément à un module de gestion des abonnés 30), qui la contrôle par comparaison avec celle qu'il a calculé localement. Si les deux signatures électroniques d'abonné sont identiques, l'authentification de l'abonné (et dans le cadre de l'invention, l'identification de l'acheteur) est réussie (le titulaire du radiotéléphone mobile 1 fait partie de la liste des abonnés) et le centre de gestion renvoie des messages 51c et 52 en ce sens vers le radiotéléphone 1 et vers un module identification 40 compris dans le serveur de paiement. De plus, la technologie GSM permet une authentification indépendante de la communication établie en fonction de la topologie du réseau (à l'établissement, lors d'un handover, etc).

En résumé, après exécution de l'étape 62 d'identification de l'acheteur, le gestionnaire 4a du serveur de paiement 4 est assuré que le titulaire 2 du radiotéléphone mobile 1 (c'est-à-dire l'acheteur dans le cas présent) est régulièrement inscrit sur la liste des abonnés et qu'il fait donc licitement partie du réseau de radiocommunication auquel le serveur de paiement 4 est raccordé.

L'étape 62 d'identification de l'acheteur est éventuellement suivie d'une étape 63 d'authentification de l'acheteur. Il s'agit pour le gestionnaire 4a du serveur de paiement 4 de s'assurer que l'acheteur 2 disposant du radiotéléphone mobile 1 au moment du règlement est habilité à payer les biens et/ou les services acquis. Si c'est effectivement le cas, le gestionnaire du serveur de paiement peut alors autoriser ou faire procéder aux compensations entre le compte de l'acheteur 2 et celui du fournisseur 7. Cette étape 63 d'authentification de l'acheteur peut être mise en oeuvre avant ou après que l'acheteur ait pris la décision d'achat.

Dans un mode de réalisation particulier, cette étape 63 d'authentification de l'acheteur comprend les étapes suivantes :
- (optionnellement) introduction dans le radiotéléphone mobile 1, par l'acheteur 2, au moyen du clavier 24, d'un code de paiement confidentiel. Cette étape d'introduction est par exemple effectuée à l'aide d'un algorithme de saisie stocké dans le radiotéléphone mobile (dans la carte SIM 23 ou dans le terminal 20) ou, selon une variante, à l'aide d'une ou plusieurs pages téléchargées, au format HDML ou équivalent, et prévues à cet effet ;
- génération d'une signature électronique d'acheteur par le radiotéléphone mobile :
   * avec un algorithme 23d et une clé 23e de sécurisation de paiement contenus dans des zones 23 protégées du radiotéléphone mobile (soit dans le terminal 20, soit dans la carte SIM 23) ;
   * à partir de données relatives à la transaction (telles que le contenu et/ou le prix) et/ou de données relatives à l'acheteur (telles que le code de paiement confidentiel, si celui-ci a été saisi par l'acheteur). En outre, les données relatives à la transaction peuvent inclure des éléments fournissant une variabilité sur la signature (tels que par exemple la date horaire de la transaction, un nombre aléatoire, un numéro de série de la transaction, etc);
- transmission de la signature électronique d'acheteur au serveur de paiement 4, par le radiotéléphone mobile 1 ;
- contrôle, dans un module de contrôle 42 compris dans le serveur de paiement 4, de la signature électronique d'acheteur. La signature électronique d'acheteur est tenue à la disposition de l'acheteur 2 et du fournisseur 7. Ce contrôle peut également être effectué par le centre de gestion des abonnés 6 ou par le centre de contrôle (non représenté). Dans le premier cas, le centre de gestion des abonnés 6 comprend un module d'authentification 33 des titulaires de radiotéléphone abonnés au service de paiement à distance.

Le déroulement de ce mode de réalisation particulier (donné à titre d'exemple) de l'étape d'authentification de l'acheteur est maintenant résumé, en relation avec la partie inférieure de la figure 5. L'acheteur 2 adresse une demande d'achat 53 au serveur de vente 8 du fournisseur 7. Il reçoit en retour les données relatives au prix du bien et/ou du service 54. L'acheteur prend ensuite une décision d'achat 55. Dans le même temps, les moyens de calcul (typiquement un microprocesseur) du radiotéléphone mobile calculent une signature électronique d'acheteur. Le radiotéléphone mobile 1 transmet, à l'aide des moyens 29a de transmission, la décision d'achat et la signature électronique d'acheteur d'une part (flèche référencée 55) au serveur 8 du fournisseur 7 et d'autre part (flèche référencée 56) au serveur de paiement 4. Le serveur de paiement 4 comprend un module de contrôle (ou de certification) 42 pour contrôler (pour certifier) la signature électronique d'acheteur. Ce module de contrôle 42 contrôle la signature en procédant par exemple à des calculs d'opérations identiques à celles effectuées dans le radiotéléphone mobile au moment de l'achat. Si la transaction est acceptée par le serveur de paiement 4, un message 57 "transaction acceptée" est adressé au serveur 8 du fournisseur, par un module accusé de réception 43 du serveur de paiement 4. Le serveur 8 du fournisseur adresse un message 58 de "confirmation d'achat" à l'acheteur (au radiotéléphone mobile de l'acheteur et/ou au domicile de l'acheteur). Les signatures électroniques d'acheteur sont stockées par un module de stockage 44 du serveur de paiement 4 et sont tenues à la disposition de l'acheteur et du fournisseur.

Il est clair que si contrôle (ou la certification) de la signature électronique d'acheteur est effectué par le centre de gestion des abonnés 6 ou par le centre de contrôle (non représenté), alors celui-ci (ceux-ci) comprend(nent) des modules de contrôle, d'accusé de réception et de stockage du type de ceux 42, 43 et 44 décrits ci-dessus pour le serveur de paiement 4.

Selon une variante plus simple à mettre en oeuvre, l'étape 63 d'authentification de l'acheteur, et éventuellement de la décision d'achat, comprend elle-même les étapes suivantes :
- introduction dans le radiotéléphone mobile 1, par l'acheteur, au moyen d'un clavier 24 associé au radiotéléphone mobile, d'un code de paiement confidentiel. Cette étape d'introduction est par exemple effectuée à l'aide d'un algorithme de saisie stocké dans le radiotéléphone mobile (dans la carte SIM 23 ou dans le terminal 20) ou, selon une variante, à l'aide d'une ou plusieurs pages téléchargées, au format HDML ou équivalent, et prévues à cet effet ;
- transmission de façon sécurisée du code de paiement confidentiel au serveur de paiement 4, par le radiotéléphone mobile ;
- contrôle du code de paiement confidentiel par le serveur de paiement 4 (consistant par exemple à vérifier que ce code de paiement confidentiel appartient effectivement à une liste prédéterminée de codes de paiement valides).

Quel que soit le mode de réalisation choisi, à l'issue de l'étape 63 d'authentification de l'acheteur, le gestionnaire 4a du serveur de paiement 4 est assuré que l'acheteur 2 disposant du radiotéléphone mobile 1 au moment du règlement est habilité à payer les biens et/ou les services acquis. La signature électronique d'acheteur permet d'arbitrer les éventuelles contestations entre l'acheteur 2 et/ou le fournisseur 7 et/ou le gestionnaire 4a du serveur de paiement 4.

Selon la présente invention, le radiotéléphone 1 comprend, par exemple dans le module de gestion de communication 21, divers moyens nécessaires à la mise en oeuvre des différentes étapes du procédé tel que décrits ci-dessus (à travers plusieurs modes de réalisation et variantes). Notamment, le radiotéléphone comprend des moyens 22 nécessaires au déverrouillage du radiotéléphone, des moyens 24 nécessaires à l'identification de l'acheteur et des moyens 25 nécessaires à l'authentification de l'acheteur.

Les moyens de gestion de la communication et/ou les moyens de traitement de l'information 29 du radiotéléphone mobile 1 peuvent également comporter des moyens 291, permettant de crypter, de manière connue en soi, les données relatives au règlement de l'acquisition des biens et/ou des services, échangées entre le radiotéléphone mobile 1 et/ou le centre de gestion 6 et/ou le serveur de paiement 4 et/ou le centre de contrôle. Grâce à ces moyens de cryptage, la confidentialité de l'acquisition est assurée.

Les moyens de traitement de l'information 29 du radiotéléphone mobile 1 peuvent également comporter des moyens 292 permettant, de manière connue en soi, le contrôle de l'intégrité des données relatives au règlement de l'acquisition des biens et/ou des services, échangées entre le radiotéléphone mobile 1 et/ou le centre de gestion 6 et/ou le serveur de paiement 4 et/ou le centre de contrôle. Ainsi, un fraudeur n'a pas la possibilité de modifier ces données.

En outre, selon la présente invention, chaque acheteur peut être associé à un portefeuille électronique 70. Comme présenté sur la figure 7, ce dernier 70 comprend par exemple :
- un identifiant de portefeuille 71, associé à un identifiant d'abonné (par exemple son "IMSI") propre à l'acheteur (en tant qu'utilisateur du réseau de radiocommunication) ;
- un code de paiement confidentiel 72, connu uniquement de l'acheteur 2 ;
- des moyens 73 de paiement, tels que notamment, mais non exclusivement, un porte-monnaie électronique 73a (généralement, pour les montants inférieurs à un seuil prédéterminé), un porte-cartes de paiement 73b (généralement, pour les montants supérieurs au seuil prédéterminé précité), ou encore tous autres moyens 73c de paiement mis à la disposition de l'acheteur par les organismes bancaires ;
- des informations 74 relatives à l'acheteur et/ou à son(ses) compte(s).

L'utilisation des moyens 73 de paiement, notamment lors d'un achat d'un bien et/ou d'un service, n'est autorisée qu'après identification, et éventuellement authentification, réussie(s) de l'acheteur 2.

Diverses localisations de stockage de ce portefeuille électronique peuvent être envisagées, à savoir dans le terminal 20, dans la carte SIM 23, dans le serveur de paiement 4, dans le centre de gestion 6 ou dans le centre de contrôle (non représenté).

## Revendications

1. Procédé pour payer à distance, de manière sécurisée, au moyen d'un radiotéléphone mobile (1) utilisé par un acheteur (2), un bien et/ou un service acquis par ledit acheteur auprès d'un fournisseur (7), ledit radiotéléphone mobile permettant l'accès à un réseau de radiocommunication (5) géré par un centre de gestion (6), un serveur de paiement (4) étant raccordé audit réseau de radiocommunication (5), caractérisé en ce que ledit procédé comprend l'étape suivante :
- identification (62) dudit acheteur (2) par ledit centre de gestion (6) et/ou par ledit serveur de paiement (4) et/ou un centre de contrôle, ladite identification de l'acheteur consistant à s'assurer que l'acheteur est un abonné régulièrement inscrit sur une liste des abonnés audit réseau de radiocommunication (5).

2. Procédé selon la revendication 1, caractérisé en ce que ladite étape (62) d'identification de l'acheteur comprend elle-même les étapes successives suivantes :
- identification d'abonné (62a), permettant audit centre de gestion (6) et/ou audit serveur de paiement (4) et/ou audit centre de contrôle de se voir communiquer un identifiant d'abonné (IMSI ; 23a ; 50) propre audit acheteur, en tant qu'utilisateur dudit réseau de radiocommunication ;
- authentification d'abonné (62b), permettant audit centre de gestion (6) et/ou audit serveur de paiement (4) et/ou audit centre de contrôle de contrôler ledit identifiant d'abonné qui lui(leur) a été communiqué lors de ladite étape (62a) d'identification d'abonné.

3. Procédé selon la revendication 2, caractérisé en ce que ladite étape (63) d'authentification d'abonné comprend elle-même les étapes suivantes :
- fourniture d'un nombre aléatoire (51a) audit radiotéléphone mobile, par ledit centre de gestion et/ou ledit serveur de paiement et/ou ledit centre de contrôle;
- génération d'une signature électronique d'abonné (51b) par ledit radiotéléphone mobile :
* avec un algorithme d'authentification individuelle (23b) et/ou une clé d'authentification individuelle (23c) contenus dans des zones (23) protégées du radiotéléphone mobile (1), et
* à partir dudit nombre aléatoire ;
- transmission de ladite signature électronique d'abonné audit centre de gestion et/ou audit serveur de paiement et/ou audit centre de contrôle, par le radiotéléphone mobile ;
- contrôle de ladite signature électronique d'abonné par ledit centre de gestion et/ou ledit serveur de paiement et/ou ledit centre de contrôle.

4. Procédé selon l'une quelconque des revendications 1 à 3, caractérisé en ce que ledit procédé comprend en outre l'étape suivante :
- authentification (63) dudit acheteur (2), et éventuellement d'une décision d'achat du bien et/ou du service acquis par l'acheteur (2), par ledit et/ou un centre de gestion (6) et/ou par ledit serveur de paiement (4) et/ou par ledit centre de contrôle.

5. Procédé selon la revendication 4, caractérisé en ce que ladite étape d'authentification de l'acheteur, et éventuellement de la décision d'achat, comprend elle-même les étapes suivantes :
- génération d'une signature électronique d'acheteur par le radiotéléphone mobile ;
- transmission (29a) de ladite signature électronique d'acheteur audit centre de gestion et/ou audit serveur de paiement et/ou audit centre de contrôle, par le radiotéléphone mobile ;
- contrôle (42) de ladite signature électronique d'acheteur par ledit centre de gestion et/ou ledit serveur de paiement (4) et/ou ledit centre de contrôle, ladite signature électronique d'acheteur étant tenue (43, 44) à la disposition de l'acheteur et du fournisseur.

6. Procédé selon la revendication 4, caractérisé en ce que ladite étape d'authentification de l'acheteur, et éventuellement de la décision d'achat, comprend elle-même les étapes suivantes :
- introduction dans le radiotéléphone mobile (1), par l'acheteur, au moyen d'un clavier (24) associé au radiotéléphone mobile (1), d'un code de paiement confidentiel ;
- transmission de façon sécurisée dudit code de paiement confidentiel audit centre de gestion et/ou audit serveur de paiement et/ou audit centre de contrôle, par le radiotéléphone mobile ;
- contrôle dudit code de paiement confidentiel par ledit centre de gestion et/ou ledit serveur de paiement (4) et/ou ledit centre de contrôle.

7. Procédé selon la revendication 5, caractérisé en ce que ladite étape d'authentification de l'acheteur, et éventuellement de la décision d'achat, comprend en outre l'étape préalable suivante :
- introduction dans le radiotéléphone mobile (1), par l'acheteur, au moyen d'un clavier (24) associé au radiotéléphone mobile (1), d'un code de paiement confidentiel ; et en ce que ladite signature électronique d'acheteur est générée notamment en fonction dudit code de paiement confidentiel.

8. Procédé selon l'une quelconque des revendications 6 et 7, caractérisé en ce que ladite étape d'introduction dudit code de paiement confidentiel est effectuée à l'aide d'un algorithme de saisie stocké dans ledit radiotéléphone mobile.

9. Procédé selon l'une quelconque des revendications 6 et 7, caractérisé en ce que ladite étape d'introduction dudit code de paiement confidentiel est effectuée à l'aide d'au moins une page téléchargée, au format HDML ou équivalent, et prévue à cet effet.

10. Procédé selon l'une quelconque des revendications 5 et 7 à 9, caractérisé en ce que ladite étape de génération d'une signature électronique d'acheteur est effectuée :
- avec un algorithme de sécurisation de paiement (23d) et/ou une clé de sécurisation de paiement (23e) contenus dans des zones (23) protégées du radiotéléphone mobile (1), et
- à partir de données relatives à la transaction et/ou de données relatives à l'acheteur.

11. Procédé selon la revendication 10, caractérisé en ce qu'au moins certaines desdites données relatives à la transaction incluent une variabilité.

12. Procédé selon l'une quelconque des revendications 10 et 11, ledit radiotéléphone mobile (1) comprenant un terminal (20) coopérant avec un module d'identification d'abonné (23), caractérisé en ce que ledit algorithme de sécurisation de paiement et/ou ladite clé de sécurisation de paiement est (sont) stocké(s) dans des zones protégées dudit terminal.

13. Procédé selon l'une quelconque des revendications 10 et 11, ledit radiotéléphone mobile (1) comprenant un terminal (20) coopérant avec un module d'identification d'abonné (23), caractérisé en ce que ledit algorithme de sécurisation de paiement (23d) et/ou ladite clé de sécurisation de paiement (23e) est (sont) stocké(s) dans des zones protégées dudit module d'identification d'abonné.

14. Procédé selon l'une quelconque des revendications 1 à 13, caractérisé en ce qu'il comprend ai outre l'étape suivante :
- déverrouillage (61) du radiotéléphone mobile (1), en cas de comparaison positive d'un code d'identification confidentiel (PIN), contenu dans des zones protégées (23) du radiotéléphone mobile (1), à un code secret, connu de l'acheteur et introduit par ce dernier dans le radiotéléphone mobile au moyen d'un clavier (24).

15. Procédé selon l'une quelconque des revendications 3, 10 et 12, ledit radiotéléphone mobile (1) comprenant un terminal (20) coopérant avec un module d'identification d'abonné (23), caractérisé en ce qu'au moins certaines desdites zones protégées du radiotéléphone mobile (1) sont comprises dans ledit module d'identification d'abonné.

16. Procédé selon l'une quelconque des revendications 1 à 15, caractérisé en ce qu'il comprend en outre l'étape suivante :
- cryptage (291) des données relatives au règlement de l'acquisition du biens et/ou du service, échangées entre le radiotéléphone mobile et le centre de gestion et/ou le serveur de paiement et/ou le centre de contrôle, de façon que la confidentialité de l'acquisition soit assurée.

17. Procédé selon l'une quelconque des revendications 1 à 16, caractérisé en ce qu'il comprend en outre l'étape suivante :
- contrôle (292) de l'intégrité des données relatives au règlement de l'acquisition du biens et/ou du service, échangées entre le radiotéléphone mobile et le centre de gestion et/ou le serveur de paiement et/ou le centre de contrôle, de façon qu'un fraudeur n'aie pas la possibilité de modifier lesdites données.

18. Procédé selon l'une quelconque des revendications 1 à 17, caractérisé en ce que ledit acheteur est associé à un portefeuille électronique (70) comprenant :
- un identifiant de portefeuille (71), associé à un identifiant d'abonné (IMSI ; 23a ; 50) propre audit acheteur en tant qu'utilisateur dudit réseau de radiocommunication ;
- des moyens de paiement (73, 73a, 73b, 73c) ;
- des informations (74) relatives audit acheteur et/ou au(x) compte(s) dudit acheteur; l'utilisation desdits moyens de paiement (73), notamment lors d'un achat d'un bien et/ou d'un service, n'étant autorisée qu'après identification (62), et éventuellement authentification (63), réussie(s) de l'acheteur.

19. Procédé selon la revendication 18, caractérisé en ce que ledit portefeuille électronique (70) comprend en outre :
- un code de paiement confidentiel (72), connu dudit acheteur.

20. Procédé selon l'une quelconque des revendications 18 et 19, ledit radiotéléphone mobile (1) comprenant un terminal (20) coopérant avec un module d'identification d'abonné (23), caractérisé en ce que ledit portefeuille électronique (70) est stocké dans l'un des éléments appartenant au groupe comprenant :
- ledit terminal (20) ;
- ledit module d'identification d'abonné (23) ;
- ledit serveur de paiement (4) ;
- ledit centre de gestion (6) ;
- ledit centre de contrôle.

21. Système pour payer à distance, de manière sécurisée, au moyen d'un radiotéléphone mobile (1) utilisé par un acheteur (2), un bien et/ou un service acquis par ledit acheteur auprès d'un fournisseur (7), ledit radiotéléphone mobile permettant l'accès à un réseau de radiocommunication (5) géré par un centre de gestion (6), un serveur de paiement (4) étant raccordé audit réseau de radiocommunication, caractérisé en ce que ledit système comprend des moyens permettant la mise en oeuvre du procédé selon l'une quelconque des revendications 1 à 20.

22. Radiotéléphone mobile (1) employé par un acheteur pour payer à distance, de manière sécurisée, un bien et/ou un service acquis par ledit acheteur (2) auprès d'un fournisseur (7), ledit radiotéléphone mobile permettant l'accès à un réseau de radiocommunication (5) géré par un centre de gestion (6), un serveur de paiement (4) étant raccordé audit réseau de radiocommunication,
caractérisé en ce que ledit radiotéléphone comprend des moyens permettant la mise en oeuvre du procédé selon l'une quelconque des revendications 1 à 20.
